# EUROPEAN PATENT APPLICATION

(11) **EP 1 260 945 A1**
(43) Date of publication of application: **27.11.2002**
(21) Application number: 01308315.9
(22) Date of filing: 28.09.2001
(51) Int. Cl.: G07F 7/10, G11C 7/24

(54) **Semiconductor integrated circuit on IC card protected against tampering**

(30) Priority: 07.05.2001 JP 2001136478
(71) Applicant: FUJITSU LIMITED, Kawasaki-shi, Kanagawa 211-8588 (JP)
(72) Inventor: Fueki, Shunsuke, c/o Fujitsu Limited, Kawasaki-shi, Kanagawa 211-8588 (JP)
(74) Representative: Mohun, Stephen John

(57) **Abstract**

A semiconductor integrated circuit includes a memory which stores secret data, a bus which is connected to the memory and transfers an encrypted address and encrypted data, a processing unit which encrypts what is to be transmitted to the bus based on an encryption key, and decrypts what is received from the bus based on the encryption key, thereby accessing the memory, an encryption/decryption circuit which is situated between the bus and the memory, and which decrypts what is received from the bus based on the encryption key and encrypts what is transmitted to the bus based on the encryption key when the processing unit accesses the memory, and an updating circuit which performs a process for updating the encryption key at predetermined intervals.

## Description

### BACKGROUND OF THE INVENTION

### 1. Field of the Invention

The present invention generally relates to semiconductor integrated circuits on IC cards, and particularly relates to a semiconductor integrated circuit on an IC card that performs various operations based on confidential data such as ID data stored in memory.

### 2. Description of the Related Art

The number of IC cards that had been issued and used worldwide by the end of 1998 reaches 2 billion with Europe as a major market. The growth in the future is expected to be in the range of 25% to 30%. According to some estimates, the main usage of IC cards is directed to financial transactions, and there is an expectation that the IC cards will form an important part of social infrastructures in the future. Against this background, various field experiments regarding the security of IC cards have been conducted in the industry as well as by academic institutes in the areas of security. A technological field that deals with illegal use of IC cards is called "anti-tampering".

Tampering that is dealt with in the anti-tampering field may be classified into "invasive attacks" and "non-invasive attacks", depending on the types of attacks made on IC cards. The invasive attacks analyze and manipulate circuitry through direct access to the ICs, thereby invading or destroying the anti-tampering functions of the cards. This requires technology, costs, and time that are comparable to those necessary for manufacturing of IC cards, and is thus not regarded as a serious threat in a practical sense.

The non-invasive attacks are conducted without directly manipulating the ICs. Possible types of attacks include taking advantage of the weak point of encryption algorithms, accessing protected information by analyzing the fluctuation of power supply currents (i.e., a current analysis method), inducing malfunctions by applying an external stress (i.e., glitch attack), etc. The non-invasive attacks can be conducted by use of a relatively ill-equipped facility, and may require a short time analysis, thereby posing a big threat to the security of IC cards.

In particular, the current analysis method is regarded as a significant threat. In a DPA (differential power analysis) method, for example, a resistor is connected in series to a power supply pin of an IC card chip, and a power supply voltage is converted into electric current data by measuring the voltage drop across the resistor, followed by statistically observing the fluctuation of the electric current data. In detail, a series of data or specific commands are repeatedly supplied to an IC card. Through this operation, a difference between specific data read from memory at a given address and another specific data read from another address is estimated as a fluctuation of the power supply potential that is caused by propagation of the data through a bus. A statistical average of the observed current data is then obtained, thereby making it possible to estimate the data of the memory with a reasonable degree of certainty.

Preventive measures against this DPA method include randomizing internal clock signals, randomizing executions of an algorithm by providing multi-path processing through the multi-thread scheme, generating spike currents as a means of camouflage, etc. If the internal clock signals are randomized, circuit operations tend to become unstable, resulting in lowering of processing performance and an increase of power consumption. The multi-path processing through the multi-thread scheme will result in a complex circuitry, thereby creating a cost increase and a chip-size increase. In order to generate spike currents, electric power will be used for operations that are not really relevant to the expected operations of the circuitry as such. This may create problems such as a need for lowering the operation frequency of an MPU.

Accordingly, there is a need for an IC card which is provided with a preventive measure against the current analysis method while keeping the expense of processing performance, chip size, and costs as small as possible.

### SUMMARY OF THE INVENTION

It is a general object of the present invention to provide a semiconductor integrated circuit that substantially obviates one or more of the problems caused by the limitations and disadvantages of the related art.

Features and advantages of the present invention will be set forth in the description which follows, and in part will become apparent from the description and the accompanying drawings, or may be learned by practice of the invention according to the teachings provided in the description. Objects as well as other features and advantages of the present invention will be realized and attained by a semiconductor integrated circuit particularly pointed out in the specification in such full, clear, concise, and exact terms as to enable a person having ordinary skill in the art to practice the invention.

To achieve these and other advantages and in accordance with the purpose of the invention, as embodied and broadly described herein, the invention provides a semiconductor integrated circuit, including a memory which stores secret data, a bus which is connected to the memory and transfers an encrypted address and encrypted data, a processing unit which encrypts what is to be transmitted to the bus based on an encryption key, and decrypts what is received from the bus based on the encryption key, thereby accessing the memory, an encryption/decryption circuit which is situated between the bus and the memory, and which decrypts what is received from the bus based on the encryption key and encrypts what is transmitted to the bus based on the encryption key when the processing unit accesses the memory, and an updating circuit which performs a process for updating the encryption key at predetermined intervals.

According to another aspect of the present invention, a method of protecting security of an IC cards includes the steps of encrypting, based on an encryption key, a signal of secret data and a signal of an address of the secret data when these signals are transferred through a bus in the IC card, and updating the encryption key at predetermined intervals.

In the invention described above, the data and address transferred on the bus are encrypted based on the encryption key, which is updated at the predetermined intervals. In the IC card of the present invention, therefore, the same data is not read even when the same address is repeatedly accessed, and the read data changes at the predetermined intervals. Accordingly, the present invention can provide a reliable security protection against the current analysis method such as the DPA method, which estimates data contents based on a statistical average of a power voltage fluctuation that is created by repeatedly reading specific data from a given address of the memory.

The security protection according to the present invention is limited to protection against access to the memory that stores confidential data (secret data) therein, and a relatively simple scheme can be adopted to implement a circuit and a program that make possible security protection. Accordingly, the present invention can provide an IC card with security protection while keeping the expense of processing performance, chip size, and costs to a minimum.

### BRIEF DESCRIPTION OF THE DRAWINGS

Fig.1 is a block diagram showing a configuration of an IC card according to a principle of the present invention;
Fig.2 is a state transition chart showing processes performed when an event is triggered by a time interruption generating unit in a confidential data protection unit;
Fig.3 is a flowchart of a process that is performed by an MPU to read data from memory;
Fig.4 is a flowchart of a process that is performed by the MPU to write data in memory;
Fig.5 is a block diagram showing an embodiment of an IC card according to the present invention;
Fig.6 is a circuit diagram showing an embodiment of a signal-line switch;
Fig.7 is a diagram showing a configuration of an encryption/decryption circuit as implemented as a Feistel-type circuitry including an operation unit; and
Fig.8 is a circuit diagram showing an example of a configuration of the function circuit.

### DESCRIPTION OF THE PREFERRED EMBODIMENTS

In the following, embodiments of the present invention will be described with reference to the accompanying drawings.

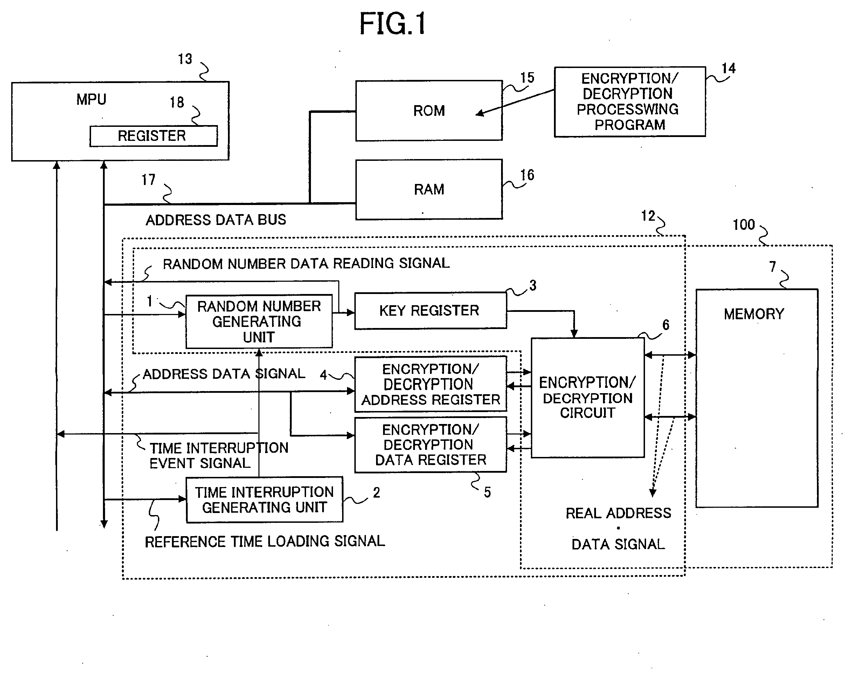

Fig.1 is a block diagram showing a configuration of an IC card according to a principle of the present invention.

An IC card of Fig.1 includes a random number generating unit 1, a time interruption generating unit 2, a key register 3, an encryption/decryption address register 4, an encryption/decryption data register 5, an encryption/decryption circuit 6, a memory 7, a MPU 13, ROM 15, a RAM 16, and an address data bus 17.

The MPU 13 attends to various types of IC card processing based on programs stored in the ROM 15. The ROM 15 stores therein an encryption/decryption processing program 14, and also stores therein various programs necessary for routine and normal operations of the MPU 13. The RAM 16 serves as a work area that is used by the MPU 13 when it operates, and stores therein data necessary for the operations of the MPU 13. The memory 7 is a nonvolatile memory, and stores therein ID data or the like that is necessary for authentication of the IC card.

The random number generating unit 1, the time interruption generating unit 2, the key register 3, the encryption/decryption address register 4, the encryption/decryption data register 5, and the encryption/decryption circuit 6 together form a confidential data protection unit 12. The confidential data protection unit 12 is situated between the MPU 13 and the memory 7. Because of processing by the confidential data protection unit 12, addresses and data appearing on the address data bus 17 are always encrypted, and the encrypted contents change with time when the MPU 13 accesses the confidential data (secret data such as ID data or the like) of the memory 7. In the following, operations of the confidential data protection unit 12 will be described in detail.

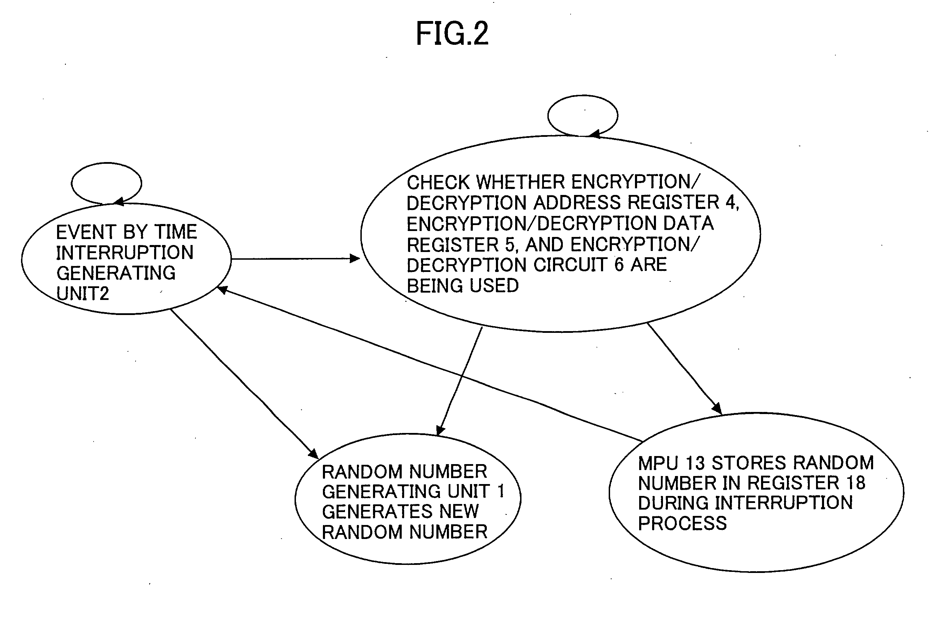

Fig.2 is a state transition chart showing processes performed when an event is triggered by the time interruption generating unit 2 in the confidential data protection unit 12.

The time interruption generating unit 2 generates an interruption signal at constant intervals. When the event of interruption signal generation takes place, the event is reported to the random number generating unit 1 and to the MPU 13. Upon receiving the reporting of the event, the random number generating unit 1 and the MPU 13 check whether the encryption/decryption address register 4, the encryption/decryption data register 5, and the encryption/decryption circuit 6 are being used for routine and normal operations. If these registers and circuit are not in use for the routine and normal operations, the random number generating unit 1 generates a new random number. The generated random number is stored in the key register 3 of the confidential data protection unit 12. Further, the MPU 13 reads the newly generated random number from the random number generating unit 1 based on the interruption program that is executed in response to the event, and stores the random number in a register 18 of the MPU 13. After this, a state transition occurs, moving to the state where further generation of an interruption signal by the time interruption generating unit 2 will be waited for.

In the present invention as described above, the time interruption generating unit 2 of the confidential data protection unit 12 creates an interruption at predetermined constant intervals. A random number is generated in response to the interruption, and is stored in the key register 3 of the confidential data protection unit 12 as well as in the register 18 of the MPU 13. Access to the memory 7 thereafter made by the MPU 13 is conducted in an encrypted form by using the random number as an encryption key. Since the generation of the random number takes place at the predetermined constant intervals by the time interruption generating unit 2, the encryption key will be updated at the predetermined constant intervals. In the IC card of the present invention, therefore, the same data is not read even when the same address is repeatedly accessed, and the read data changes at the predetermined constant intervals. Accordingly, the present invention can provide a reliable security protection against the current analysis method such as the DPA method, which estimates data contents based on a statistical average of a power voltage fluctuation that is created by repeatedly reading specific data from a given address of the memory.

The random number generation that is triggered by the time interruption generating unit 2 should be performed at such frequency as required to provide sufficient protection against the current analysis method such as the DPA method. For example, it is estimated to take approximately 15 minutes to take 2000 to 3000 samples of the power supply current, but it would take less than a minute to take 100 samples. In consideration of this, it is desirable to repeat the generation of random numbers at time intervals of 100 ms or shorter, for example. In the present invention, the random numbers may be generated at constant intervals, or may be generated at varying intervals that insure sufficient frequency for the purpose of protection.

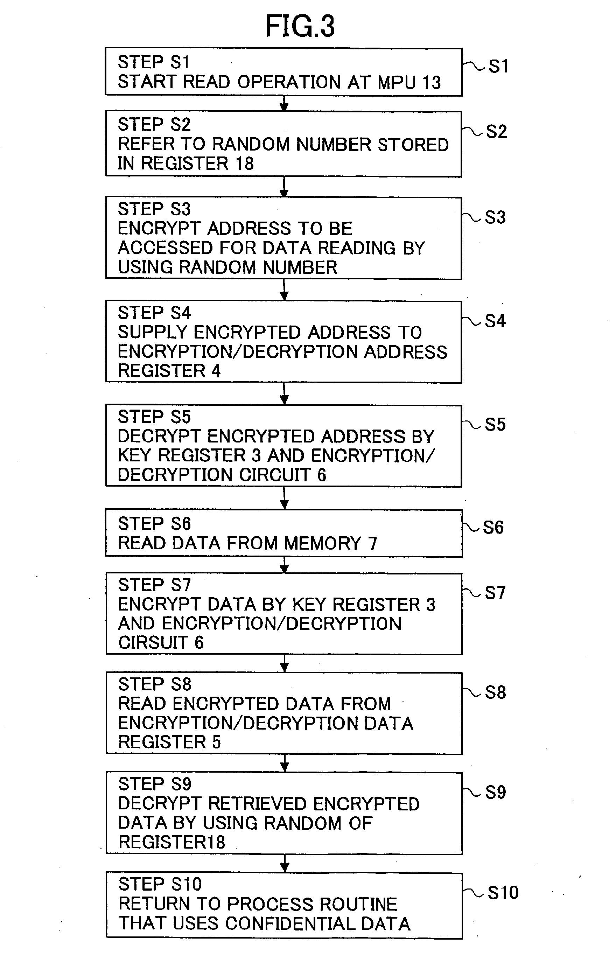

Fig.3 is a flowchart of a process that is performed by the MPU to read data from memory.

The data read operation shown in Fig.3 is performed when there is a need to read confidential data (secret data) from the memory 7. Such a need arises when the MPU 13 needs the confidential data (secret data) such as ID data or the like after the condition returns to that of a routine and normal operation following the end of an interruption that is brought about by the time interruption generating unit 2. The operations performed by the MPU 13 are controlled based on the encryption/decryption processing program 14 stored in the ROM 15.
At step S1, a read operation starts at the MPU 13.
At step S2, the MPU 13 refers to a random number stored in the internal register 18.
At step S3, the MPU 13 encrypts an address to be accessed for data reading by using the random number.
At step S4, the MPU 13 stores the encrypted address in the encryption/decryption address register 4 through the address data bus 17.
At step S5, the encryption/decryption circuit 6 uses the random number stored in the key register 3 as an encryption key to decrypt the encrypted address stored in the encryption/decryption address register 4. The encryption/decryption circuit 6 supplies the decrypted address as real address signals to the memory 7.
At step S6, data is read from the memory 7 at the indicated address.
At step S7, the encryption/decryption circuit 6 uses the random number stored in the key register 3 as an encryption key to encrypt the data read from the memory 7, and stores the encrypted data in the encryption/decryption data register 5.
At step S8, the MPU 13 reads the encrypted data from the encryption/decryption data register 5 via the address data bus 17.
At step S9, the MPU 13 uses the random number stored in the register 18 as an encryption key to decrypt the encrypted data retrieved from the encryption/decryption data register 5.
At step S10, the procedure goes back to a process routine that was being performed prior to the execution of read processing, and this process routine is resumed by using the retrieved confidential data (secret data).

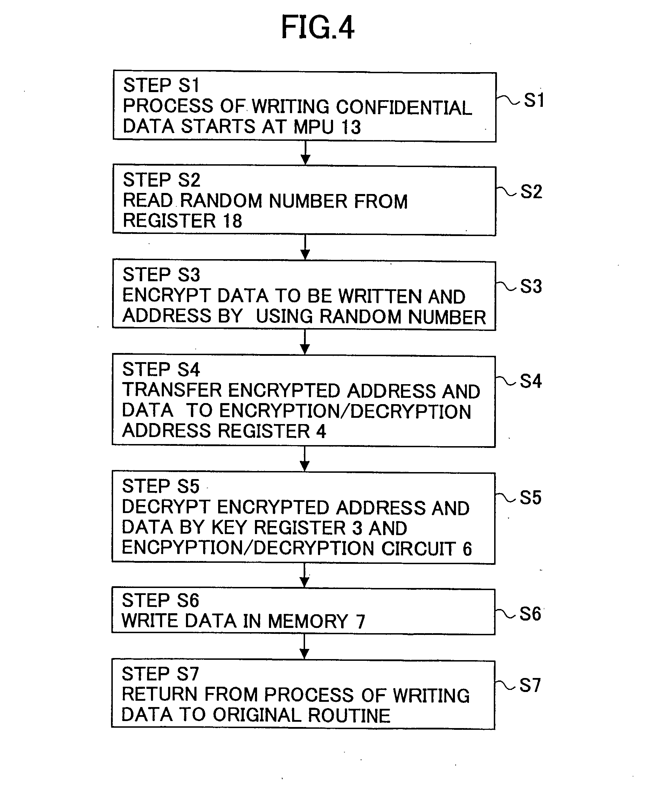

Fig.4 is a flowchart of a process that is performed by the MPU to write data in memory.

The data write operation shown in Fig.4 is performed when the MPU 13 needs to write confidential data such as ID data or the like in the memory 7 after the condition returns to that of a routine and normal operation following the end of an interruption that is brought about by the time interruption generating unit 2. The operations performed by the MPU 13 are controlled based on the encryption/decryption processing program 14 stored in the ROM 15.
At step S1 an operation to write confidential data starts at the MPU 13.
At step S2, the MPU 13 refers to a random number stored in the internal register 18.
At step S3, the MPU 13 encrypts data to be written and a write address by using the random number.
At step S4, the MPU 13 stores the encrypted address in the encryption/decryption address register 4 through the address data bus 17, and stores the encrypted data in the encryption/decryption data register 5.
At step S5, the encryption/decryption circuit 6 uses the random number stored in the key register 3 as an encryption key to decrypt the encrypted address stored in the encryption/decryption address register 4. Further, the encryption/decryption circuit 6 uses the random number stored in the key register 3 as an encryption key to decrypt the encrypted data stored in the encryption/decryption data register 5. The encryption/decryption circuit 6 supplies the decrypted address as real address signals to the memory 7, and further supplies the decrypted data as real data signals to the memory 7.
At step S6, the specified data is written in the memory 7 at the specified address.
At step S7, the procedure goes back to a process routine that was being performed prior to the execution of write processing, and this process routine is resumed.

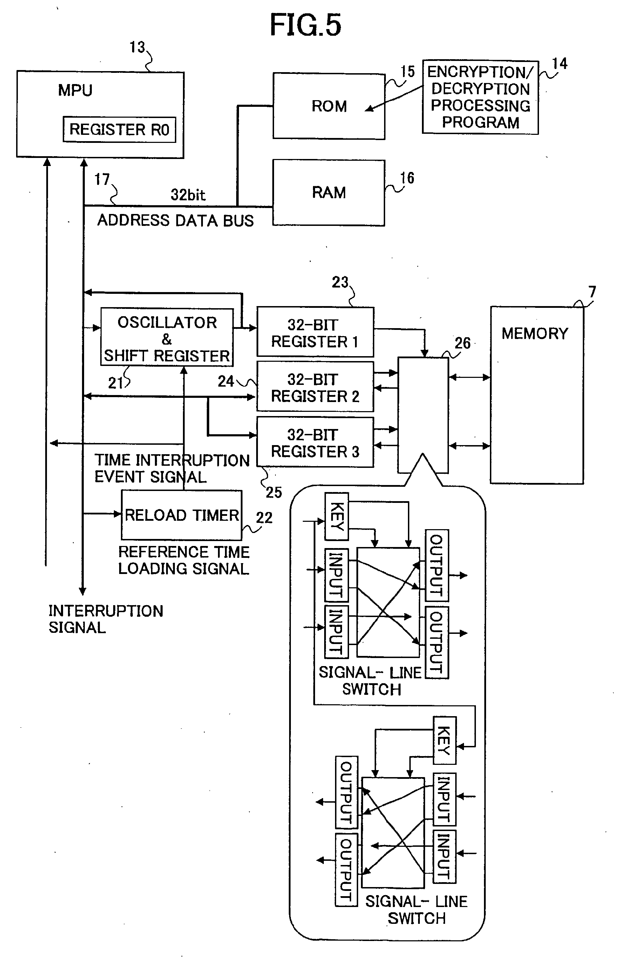

Fig.5 is a block diagram showing an embodiment of an IC card according to the present invention.

The IC card of Fig.5 includes an oscillator-&-shift-register 21, a reload timer 22, a 32-bit register 23, a 32-bit register 24, a 32-bit register 25, a signal-line switch 26, the memory 7, the MPU 13, the ROM 15, the RAM 16, and the address data bus 17. The oscillator-&-shift-register 21 corresponds to the random number generating unit 1, and the reload timer 22 corresponds to the time interruption generating unit 2. Further, the 32-bit register 23, the 32-bit register 24, and the 32-bit register 25 correspond to the key register 3, the encryption/decryption address register 4, and the encryption/decryption data register 5, respectively. The signal-line switch 26 corresponds to the encryption/decryption circuit 6.

The MPU 13 may be provided with an ALU and a set of resisters having any bit length such as 8 bits, 16 bits, 32 bits, etc., but has a 32-bit configuration in this example. The oscillator-&-shift-register 21 includes a ring oscillator and a shift register having a predetermined bit length. The oscillator-&-shift-register 21 takes samples of the output of the ring oscillator at predetermined intervals, and stores the samples successively in the shift register, thereby setting a random value in the shift register. The reload timer 22 is a hardware resource conventionally provided for the MPU 13 for the purpose of generating a timer interruption, and may be used as the time interruption generating unit 2.

The 32-bit register 23, 32-bit register 24, and 32-bit register 25 are each comprised of latches, and store an encrypted key (i.e., the random number generated by the oscillator-&-shift-register 21), an encrypted address, and encrypted data, respectively. The signal-line switch 26 may be comprised of programmable logic gates such as PLDs (programmable logic devices) or FPGAs (field programmable gate arrays), and provides signal line connections between input terminals and output terminals in a reconfigurable manner that is defined by the encryption key. The encryption/decryption circuit 6 may not be a signal-line switch as in this example, but may be a Feistel-type circuitry including an operation unit as will be described later.

When an interruption is generated at constant intervals by the reload timer 22, the MPU 13 suspends a routine and normal operation, and starts executing a program stored at an address specified in the interruption vector. Through the execution of this program, the MPU 13 checks whether the 32-bit register 24, the 32-bit register 25, and the signal-line switch 26 are being used. If they are not being used, the random number generated by the oscillator-&-shift-register 21 is retrieved and stored in the register 18. The oscillator-&-shift-register 21 also checks whether the 32-bit register 24, the 32-bit register 25, and the signal-line switch 26 are being used, and generates the random number in response to the check. This makes it possible to avoid a situation in which the random number stored in the register 18 of the MPU 13 is inconsistent with the random number stored in the 32-bit register 23.

During a routine and normal operation, the encryption/decryption processing is performed based on the numerical values stored in the register 18 of the MPU 13 and the 32-bit register 23 to access the memory 7 in the same manner as was described in connection with Fig.3 and Fig.4. During this operation, the signal-line switch 26 comprised of PLDs, FPGAs, or the like connects signal lines between the input thereof and the output thereof in a reconfigurable manner responsive to the encryption key, thereby achieving the encryption/decryption processing by use of a simple structure. The encryption/decryption processing inside the MPU 13 is performed by means of software based on the encryption/decryption processing program 14 stored in the ROM 15.

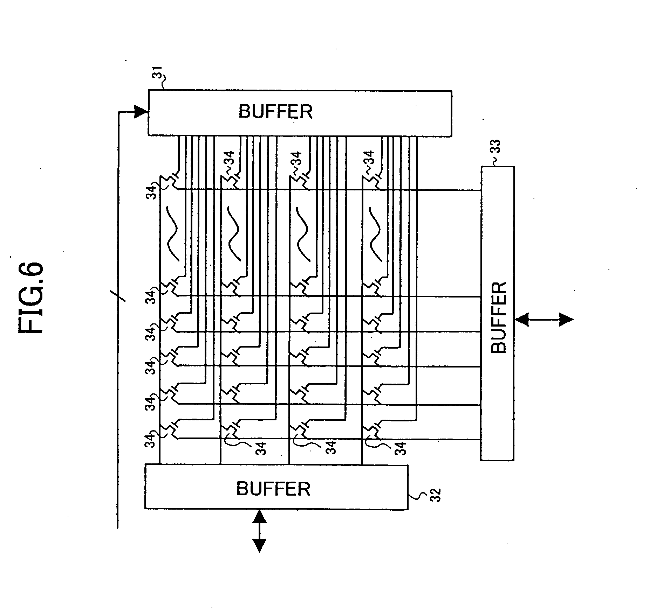

Fig.6 is a circuit diagram showing an embodiment of the signal-line switch 26. The signal-line switch 26 shown in Fig.6 includes buffers 31 through 33 and a plurality of path transistors 34 arranged in a matrix formation. The path transistors 34 are situated at intersections between the signal lines extending from the buffer 32 in a horizontal direction and the signal lines extending from the buffer 33 in a vertical direction, and the gates of the path transistors 34 are connected to control lines extending from the buffer 31. The buffer 31 receives the data of an encryption key, and drives the control lines according to the encryption key. When the path transistors 34 connected to the control lines that are HIGH become conductive, the horizontal signal lines extending from the buffer 32 and the vertical signal lines extending from the buffer 33 are electrically connected at the intersections where the transistors become conductive. In this manner, signal connection paths are provided in a reconfigurable manner between the input and the output in accordance with the contents of the encryption key. The configuration shown in Fig.6 is of a simplified version provided for the purpose of illustration, so that the numbers of signal lines and path transistors 34 are different from those of a 32-bit configuration, for example.

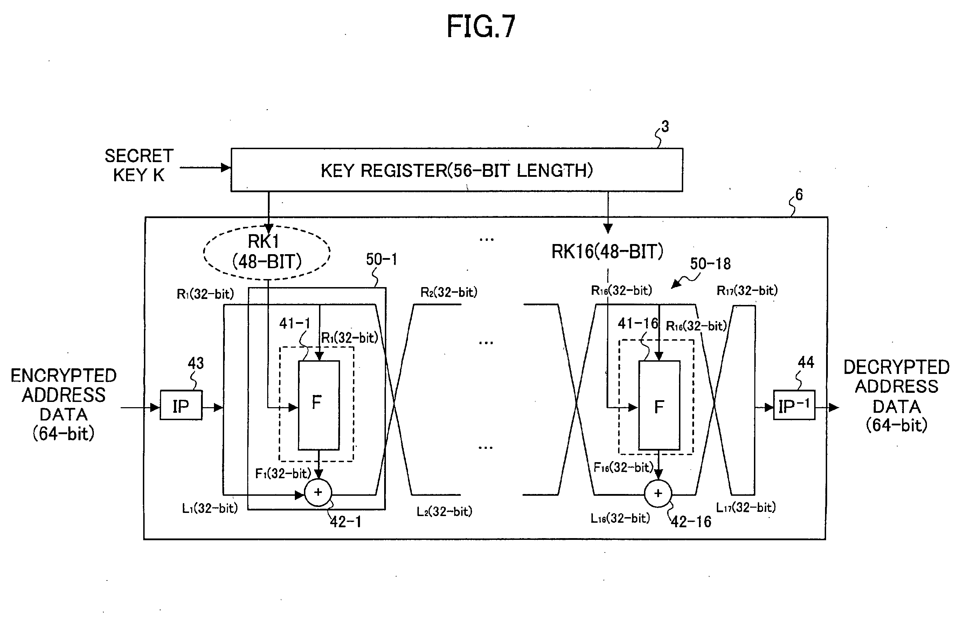

Fig.7 is a diagram showing a configuration of the encryption/decryption circuit 6 as implemented as a Feistel-type circuitry including an operation unit.

The encryption/decryption circuit 6 of Fig.7 includes function circuits 41-1 through 41-16 that are logic circuits for implementing a predetermined function F, remainder computation units 42-1 through 42-16, a bit transposing circuit 43 that is a logic circuit for performing bit transposing processing IP, and a bit transposing circuit 44 that is a logic circuit for performing inverse processing IP⁻¹ of the bit transposing processing IP. A processing circuit for one stage is comprised of one function circuit and one remainder computation unit, and processing circuits 50-1 through 50-16 are provided to correspond to 16 stages in total. In this example, an encrypted address or encrypted data serving as an input is 64 bits, and a decrypted address or decrypted data sent out as an output is 64 bits. The encryption key (secret key K) stored in the key register 3 is a 56-bit length.

The entered encrypted address or data is bit transposed by the bit transposing circuit 43. R₁ that is a 32-bit half of the transposed data on the right-hand side, and L₁ that is a 32-bit left-hand-side half of the transposed data are supplied to the processing circuit 50-1 of the first stage. R₁ that is a 32-bit right-hand-side half is supplied as L₂ to the processing circuit of the second stage, and is also supplied to the function circuit 41-1 of the processing circuit of the first stage. The function circuit 41-1 further receives 48-bit RK1 from the key register 3. The function circuit 41-1 computes the predetermined function F(R₁, RK1) from R₁ and RK1, and outputs a 32-bit result F₁. The result F₁ is supplied to the remainder computation unit 42-1. The remainder computation unit 42-1 carries out a remainder computation in respect of F₁ and L₁, and supplies the result of remainder computation to the processing circuit of the second stage as R₂. Here, the remainder computation obtains a remainder of the sum of F₁ and L₁ divided by a base number. Namely, it obtains bits that remain after disregarding a carryover bit of the MSB among the bits of the sum of F₁ and L₁.

The computation as described above is successively performed by the 16 stages of the processing circuits 50-1 through 50-16. The final products R₁₇ and L₁₇ are combined and subjected to the inverse processing IP⁻¹ of the bit transposing processing IP by the bit transposing circuit 44. This produces a decrypted address or decrypted data (64 bits).

The encryption/decryption circuit 6 as describe above may be implemented by use of PLA or FPGA.

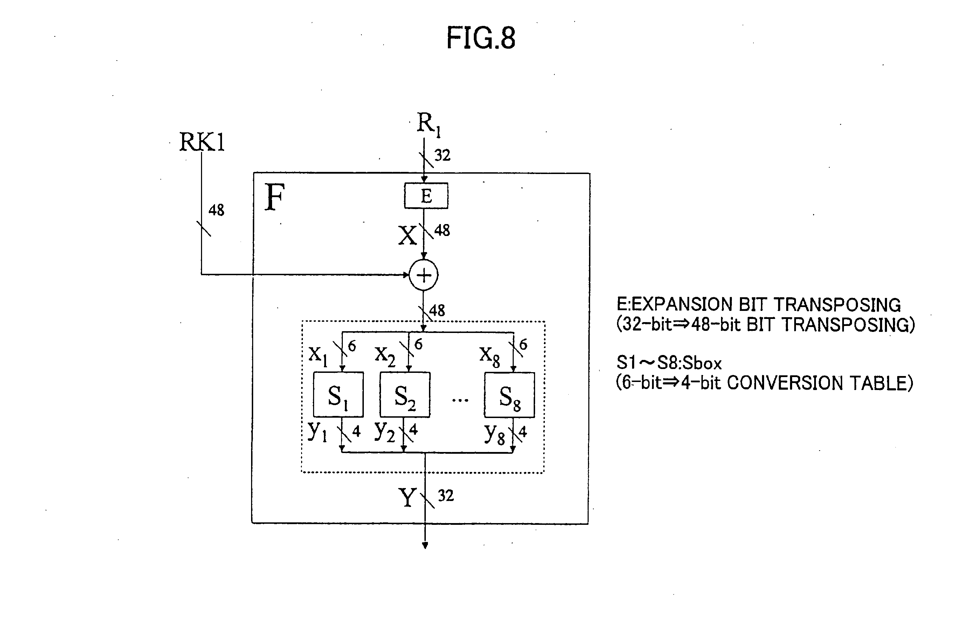

Fig.8 is a circuit diagram showing an example of a configuration of the function circuit. The function circuits 41-1 through 41-16 all have the same configuration, which is shown in Fig.8.

The function circuit of Fig.8 includes an expansion bit transposing processing circuit 61, a remainder computation unit 62, and Sbox circuits S₁ through S₈. The expansion bit transposing processing circuit 61 performs processing that expands a 32-bit R₁ to 48 bits, and transposes it thereafter. Expanded and transposed data X is supplied to the remainder computation unit 62. The remainder computation unit 62 carries out a remainder computation in respect of the 48-bit RK1 and the 48-bit expanded and transposed data X. 48-bit data obtained as a result of the remainder computation is supplied to the Sbox circuits S₁ through S₈ with each circuit receiving corresponding 6 bits. Each of the Sbox circuits S₁ through S₈ converts the 6-bit data supplied thereto into 4-bit data according to a conversion table. The 4-bit data output from the 8 Sbox circuits S₁ through S₈ are combined together to be output as 32-bit data.

As described above, the encryption/decryption circuit 6 may be implemented by use of PLA, FPGA, or the like, and the conversion table of the Sbox circuits S₁ through S₈ used in the computation by the function circuit as described above may be configured to be rewritable from outside the circuit. In such a configuration, the contents of the conversion tables may be changed as appropriate, thereby changing the encryption algorithm. This can further enhance the security.

In the configuration of the present invention as described above, the random number generating unit 1, the key register 3, the encryption/decryption circuit 6, and the memory 7 of Fig.1 is preferably configured as a single macro 100 in a semiconductor integrated circuit as shown by dotted lines in Fig.1. This is because signal levels inside a macro are difficult to detect by use of a probe since the interior of the macro has circuit elements and wiring lines intertwined in multi-layers, whereas signal levels of wiring lines between macros are easy to detect by directly applying a probe to the wiring lines. In order to insure security not only against the DPA method but also attacks that attempt to detect signals directly from internal wiring lines, the main portion of the present invention configuration is preferably contained inside a single macro.

Further, the register 18 of the MPU 13 shown in Fig.1 may be one of general-purpose registers conventionally provided. If the processing efficiency carries a significant weight, however, the register 18 may be provided as a dedicated register newly added to the MPU 13. Moreover, although the encryption/decryption address register 4 and the encryption/decryption data register 5 are shown as separate registers in Fig.1, they may be configured as a single register, so that the address and the data are combined together and treated as a single data set. In a system using encrypted data, generally, the longer the bit length of the processed data, the higher the level of security. Accordingly, combining the address and the data together and treating them as a single data set will further enhance the security of IC cards of the present invention.

Further, the present invention is not limited to these embodiments, but various variations and modifications may be made without departing from the scope of the present invention.

The present application is based on Japanese priority application No. 2001-136478 filed on May 7, 2001, with the Japanese Patent Office, the entire contents of which are hereby incorporated by reference.

## Claims

1. A semiconductor integrated circuit, comprising:
a memory which stores secret data;
a bus which is connected to said memory and transfers an encrypted address and encrypted data;
a processing unit which encrypts what is to be transmitted to said bus based on an encryption key, and decrypts what is received from said bus based on the encryption key, thereby accessing said memory;
an encryption/decryption circuit which is situated between said bus and said memory, and which decrypts what is received from said bus based on the encryption key and encrypts what is transmitted to said bus based on the encryption key when said processing unit accesses said memory; and
an updating circuit which performs a process for updating the encryption key at predetermined intervals.

2. The semiconductor integrated circuit as claimed in claim 1, wherein said updating circuit includes:
a random number generating circuit which generates the encryption key; and
a time interruption generating circuit which triggers said random number generating circuit at the predetermined intervals.

3. The semiconductor integrated circuit as claimed in claim 2, wherein said random number generating circuit, said encryption/decryption circuit, and said memory are implemented as a single macro.

4. The semiconductor integrated circuit as claimed in claim 1, wherein encryption/decryption processing by said encryption/decryption circuit and encryption/decryption processing by said processing unit are reconfigurable from outside.

5. The semiconductor integrated circuit as claimed in claim 1, wherein said encryption/decryption circuit is implemented as a Feistel-type circuit.

6. The semiconductor integrated circuit as claimed in claim 1, wherein said processing unit includes a register that stores the encryption key therein.

7. The semiconductor integrated circuit as claimed in claim 1, wherein said encryption/decryption circuit treats the address and the data as a single combined data set.

8. The semiconductor integrated circuit as claimed in claim 1, wherein said memory is a nonvolatile memory.

9. The semiconductor integrated circuit as claimed in claim 1, wherein said encryption/decryption circuit is configured to provide connection paths between an input thereof and an output thereof in a reconfigurable manner in accordance with the encryption key.

10. A method of protecting security of an IC card; comprising the steps of:
encrypting, based on an encryption key, a signal of secret data and a signal of an address of the secret data which are transferred on a bus; and
updating the encryption key at predetermined intervals.
